(19)

**Europäisches Patentamt**

**European Patent Office**

**Office européen des brevets**

(11) **EP 4 206 688 B1**

(12) **EUROPEAN PATENT SPECIFICATION**

(45) Date of publication and mention
of the grant of the patent:
**29.10.2025 Bulletin 2025/44**

(51) International Patent Classification (IPC):
**G01Q 60/06** (2010.01)

(21) Application number: **21217980.8**

(52) Cooperative Patent Classification (CPC):
**G01Q 60/06**

(22) Date of filing: **28.12.2021**

(54) **METHOD AND APPARATUS FOR SCATTERING-TYPE SCANNING NEAR-FIELD OPTICAL MICROSCOPY (S-SNOM)**

VERFAHREN UND VORRICHTUNG FÜR STREUENDE OPTISCHE NAHFELDRASTERMIKROSKOPIE (S-SNOM)

PROCÉDÉ ET APPAREIL POUR UNE MICROSCOPIE OPTIQUE EN CHAMP PROCHE DE TYPE À DIFFUSION EN MODE SANS CONTACT INTERMITTENT (S-SNOM)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.07.2023 Bulletin 2023/27**

(73) Proprietors:
• **Max-Planck-Gesellschaft zur Förderung der Wissenschaften E. V.**
**80539 München (DE)**
• **Humboldt-Universität zu Berlin**
**10099 Berlin (DE)**

(72) Inventors:
• **PALATO, Samuel**
**14195 Berlin (DE)**
• **GROßE, Nicolai**
**14195 Berlin (DE)**

• **MÜLLER-STÄHLER, Julia**
**10099 Berlin (DE)**

(74) Representative: **v. Bezold & Partner**
**Patentanwälte - PartG mbB**
**Ridlerstraße 57**
**80339 München (DE)**

(56) References cited:
**EP-A1- 2 980 590**

• **WANG HAOMIN ET AL: "Scattering-type scanning near-field optical microscopy with low-repetition-rate pulsed light source through phase-domain sampling", NATURE COMMUNICATIONS, vol. 7, no. 1, 1 December 2016 (2016-12-01), XP055925395, Retrieved from the Internet <URL:https://www.nature.com/articles/ncomms13212.pdf> DOI: 10.1038/ncomms13212**

**Description**

Field of the invention

The invention relates to a method of scattering-type scanning near-field optical microscopy. Furthermore, the invention relates to a scattering-type scanning near-field optical microscopy apparatus. Applications of the invention are available e. g. in the fields of investigating, in particular imaging, sample surfaces, e. g. in physics or material sciences.

Prior art

In the present specification, reference is made to the following prior art illustrating the technical background of the invention:

> [1] EP 1 770 714 B1;
> [2] A. J. Sternbach et al. in "Opt. Express" 25, 28589 (2017);
> [3] A. J. Sternbach et al. in "Nat. Commun." 11, 3567 (2020);
> [4] H. Wang et al. in "Nat. Commun." 7, 13212 (2016); and
> [5] EP 2 980 590 A1.

Scattering-type scanning near field optical microscopy (s-SNOM) is a generally known method for investigating a sample surface, wherein a cantilever with a metallic atomic force microscopy (AFM) tip oscillates near the surface and a desired measuring signal is obtained by illuminating the AFM tip and monitoring the intensity of a scattered optical signal (see e. g. [1]). The AFM tip is operated in tapping mode, in which the tip oscillation frequency $\Omega$ is determined by the mechanical resonance vibration of the cantilever. As such, a precise value of $\Omega$ cannot be chosen at will and the phase of the oscillation drifts randomly. The cantilever position is thus read out by a quadrant photodetector. The output signal of the quadrant photodetector is referred to as a mechanical oscillation signal. The desired s-SNOM signal is obtained externally by retrieving the modulations of the scattered optical signals at higher harmonics $n\Omega$ where n normally ranges from 2 to 4. This detection is usually performed employing lock-in detection.

When using short pulsed lasers (duration < 100 ps) for illuminating the AFM tip, every laser pulse contains only a single data point of information. Performing the lock-in-type detection therefore requires the repetition rate of the laser $f_{rep}$ to be at least twice the modulation frequency of interest. In the case of s-SNOM in the visible spectrum, n = 4, $\Omega$ = 250 to 400 kHz and therefore $f_{rep} \geq 800$ kHz. This criterion is a strict minimum, and the addition of further modulations schemes (e. g.: phase of reference arm in pseudo-heterodyne detection, amplitude modulation for time-resolved SNOM) can modify this condition [1, 2, 3].

Lock-in detection therefore imposes constraints between the modulation signal frequency (tip tapping) and the effective sampling rate (laser repetition rate). It is desirable to eliminate this constraint between the two components in order to fully exploit the advantages of both technologies. In the case of s-SNOM higher tapping frequencies yield better AFM performance; and lasers with a lower repetition rate enable the use of well-established and powerful technologies based on nonlinear optics. However, the standard lock-in detection usually is incompatible with commercial AFM technique ($\Omega$ =200 to 400 kHz) and appropriate available pulsed laser sources ($f_{rep}$ = 200 kHz).

The standard solution of this problem is seeking a compromise between the modulation frequency and the pulsed laser source. Such compromises yield sub-optimal performance of both subsystems and are typically very expensive. It has been proposed to perform time-resolved SNOM by lowering the tapping frequency to $\Omega$ = 75 kHz, using a pulsed laser with $f_{rep}$ = 600 kHz, and using a pair of cutting-edge digital boxcars integrators [2, 3]. However, this solution does not avoid the constraints on the two components and is extremely expensive.

Alternatively, s-SNOM with phase-domain sampling ([4]) allows employing a pulsed laser at low repetition rate. However, phase-domain sampling requires continuous sampling of the modulation signal at a sampling rate that is many times higher than the repetition rate of the pulsed laser. As such, the data processing necessitates a large computational overhead. The increased sampling rate furthermore contributes to increasing costs of the measurement and has prevented the application of the method to more advanced s-SNOM configurations ([1]).

A signal detection circuit and a scanning probe microscope including the signal detection circuit are disclosed in [5]. The signal detection circuit is operated using processing of complex signals generated from an input signal and a reference signal created by a voltage controlled oscillator (VCO).

Objective of the invention

The objective of the invention is to provide an improved s-SNOM method and/or apparatus being capable of avoiding limitations of conventional techniques. In particular, the objective of the invention is to avoid the constraints on the pulsed laser source and the modulation frequency of an s-SNOM tip and to provide scattering-type scanning near-field optical microscopy being capable of operation with high tapping frequencies of the s-SNOM tip and low repetition frequencies of the pulsed laser source for illumination of the s-SNOM tip, in particular based on phase-domain sampling. The s-SNOM method and/or apparatus are to be capable of investigating a sample surface with reduced complexity and data processing power and/or with increased precision and/or reliability.

Brief summary of the invention

The above objective is solved by an s-SNOM method and/or an s-SNOM apparatus comprising the features of the independent claims, respectively. Preferred embodiments and applications of the invention arise from the dependent claims.

According to a first general aspect of the invention in claim 1, the above objective is solved by a method of scattering-type scanning near-field optical microscopy, comprising the steps of placing an s-SNOM tip at a near-field distance from a sample to be investigated and subjecting the s-SNOM tip to a mechanical oscillation which provides a primary modulation, illuminating the oscillating s-SNOM tip with a sequence of illumination light pulses, wherein each of the illumination light pulses (numbered by index i) hits the s-SNOM tip at a specific s-SNOM tip modulation phase $\phi_i$ of the mechanical oscillation, collecting scattering light pulse amplitudes $S_i$, each being created by scattering one of the illumination light pulses at the s-SNOM tip, using a scattering light detector device, collecting the s-SNOM tip modulation phase $\phi_i$ associated to each of the collected scattering light pulse amplitudes $S_i$, using a mechanical oscillation detector device, and calculating an s-SNOM near-field signal by demodulating a scattering light function $S_i(\phi_i)$ of the scattering light pulse amplitudes $S_i$ in dependency on the s-SNOM tip modulation phases $\phi_i$.

The term "s-SNOM tip" covers any tip-shaped structure, being capable of oscillating at the near-field distance from the surface of the sample under investigation such that an optical interaction of the scattering light near field at the tip with the sample is obtained. The scattering light amplitude is a measure of the optical interaction, which is specifically determined by optical features of the sample surface (including material below the surface influencing the optical interaction). The s-SNOM tip has a characteristic tip dimension, e. g. size along the sample surface, which is smaller than the wavelength of the illumination light pulses. Preferably, the s-SNOM tip is provided by a tip of an AFM apparatus. The illumination light pulses preferably comprise laser pulses. According to the invention, each of the s-SNOM tip modulation phases $\phi_i$ is obtained by the steps of splitting an output signal of the mechanical oscillation detector device into a first output signal portion (X) and a second output signal portion (Y) being phase-shifted relative to the first output signal portion (X), wherein the output signal is split with a phase shifter device coupled with the mechanical oscillation detector device, and calculating the s-SNOM tip modulation phase $\phi_i$ from the first and second output signal portions (X, Y) using a demodulation device.

According to a second general aspect of the invention in claim 10, the above objective is solved by a scanning near-field optical microscopy (s-SNOM) apparatus, being configured for scattering-type scanning near-field optical microscopy, comprising a scanning near-field optical microscope including an s-SNOM tip being configured for a placement at a near-field distance from a sample to be investigated, while being subjected to a mechanical oscillation which provides a primary modulation, an illumination device being arranged for illuminating the oscillating s-SNOM tip with a sequence of illumination light pulses, wherein each of the illumination light pulses hits the s-SNOM tip at a specific s-SNOM tip modulation phase $\phi_i$ of the mechanical oscillation, a scattering light detector device being arranged for collecting scattering light pulse amplitudes $S_i$, each of which being created by scattering one of the illumination light pulses at the s-SNOM tip, a mechanical oscillation detector device being arranged for collecting the s-SNOM tip modulation phase $\phi_i$ associated to each of the collected scattering light pulse amplitudes $S_i$, and a demodulation device being arranged for calculating an s-SNOM near-field signal by demodulating a scattering light function $S(\phi_i)$ of the scattering light pulse amplitudes $S_i$ in dependency on the s-SNOM tip modulation phases $\phi_i$. Preferably, the illumination device is further arranged for illuminating the oscillating s-SNOM tip with an indicator light beam to be deflected to the mechanical oscillation detector device. Particularly preferred, the illumination device comprises a first light source for creating the illumination light pulses and a second light source for creating the indicator light beam. Optionally, the illumination device includes at least one further light source, in particular pulsed light source for illuminating the s-SNOM tip with further illumination light pulses for providing at least one additional optical signal channel.

According to the invention, the mechanical oscillation detector device is coupled with a phase shifter device, wherein the phase shifter device is configured for splitting an output signal of the mechanical oscillation detector device into a first output signal portion (X) and a second output signal portion (Y) being phase-shifted relative to the first output signal portion (X), and the demodulation device is configured for calculating the s-SNOM tip modulation phases $\phi_i$ from the first and second output signal portions (X, Y).

Preferably, the s-SNOM apparatus of the second general aspect of the invention or an embodiment thereof is configured for executing the s-SNOM method of the first general aspect of the invention or an embodiment thereof.

Advantageously, the invention provides an improved s-SNOM technique based on phase-domain sampling. The inventive signal acquisition replaces the conventional lock-in detection in s-SNOM signal processing. Splitting the output signal of the mechanical oscillation detector device into the first and second output signal portions allows sampling these two signal components simultaneously with the optical signal scattered at the s-SNOM tip. The acquisition of each sample can be synchronized with the illumination light pulses, therefore requiring a sampling rate according to the repetition rate of the illumination light pulses only. This sampling rate is significantly lower than that required for other techniques, thereby reducing cost and greatly increasing versatility.

Accordingly, the above constraints between the lock-in modulation frequency and laser repetition rate are avoided. The invention allows s-SNOM investigations with relatively high tapping frequencies, e. g. in a range above 225 to 375 kHz, thus yielding improved AFM performance, while employing available pulsed laser sources with a repetition rate at or below 200 kHz.

Furthermore, in contrast to conventional s-SNOM using phase-domain sampling ([4]), continuous electronic sampling the output signal of the mechanical oscillation detector device (modulation signal) is avoided by generating the two replicas of the modulation signal with a fixed phase relationship, preferably in quadrature, thus providing the specific s-SNOM tip modulation phase $\phi_i$ for each i-th illumination light pulse as an instantaneous phase reference. The invention converts the continuous sampling necessary for conventional lock-in detection into a discrete sampling process where each illumination light pulse is recorded independently with a single sample. As a further advantage, this conversion is achieved preferably using analogue electronics to create the copies of the modulation signal at frequency $\Omega$. Analogue circuits for splitting the output signal of the mechanical oscillation detector device are capable of replacing the digital acquisition and computation system as required e. g. in [4], so that data processing power can be further reduced. Particularly preferred, the amplitudes of the two channels are equal and their phase shift is $\pi/2$, which correspond to the in-phase and quadrature components.

Hence, for any arbitrary moment in time, in particular for the occurrence of the scattering light pulses, a related modulation phase of the s-SNOM tip can be obtained directly from this modulation signal pair (sample pair). The scattering signal of interest can thereafter be at arbitrary discrete points in time (in particular synchronized with the illumination light pulses). Advantageously, this acquisition system can operate even in situations that are challenging to standard lock-in detection, such as when the modulation rate is difficult to control, or when the laser repetition rate is not constant.

As a further advantage, calculating the s-SNOM near-field signal of interest by demodulating the scattering light function $S(\phi_i)$ based on the sampled s-SNOM tip modulation phases $\phi_i$ can be executed as known per se, e. g. from [4]. Additionally, the calculation is substantially facilitated. Following a simple calibration step, the first and second output signal portions can be used to derive a unique value of the modulation phase, for every illumination light pulse. The existing phase-domain sampling analysis method can then be applied to the resulting dataset using fast and efficient algorithms. The fast processing enables live display and facilitates operation of the entire apparatus. The method is easily extended to multiple signals and multiple modulation schemes.

It is noted that methods of extracting a phase-angle of an external signal using two local oscillators with a fixed 90 degree phase relationship are known from radio communication and Doppler-radar techniques. However, in contrast to these concepts, the inventive technique does not start with an internal pure sine-wave local oscillator from which a phase-shifted replica is produced. On the contrary, the oscillating s-SNOM tip is an imperfect external source that has broadband noise (optical shot-noise) overlayed on it, and is slowly drifting in phase as a result of both uncontrolled drifts and variations in the sample properties at different locations on the sample, in particular when the s-SNOM tip scans over the sample. The inventors have found that phase-angle extraction is also possible with the imperfect oscillation source and can be used for obtaining the s-SNOM near-field signal.

Splitting the output signal of the mechanical oscillation detector device comprises creating the first and second output signal portions with a mutual phase shift. Advantageously, multiple techniques of creating the phase shifted second output signal portion are available. According to an embodiment of the invention, the initial output signal may be split into two copied signal components and the phase shift is obtained by shifting the phase of one of the signal components relative to the phase of the other one of the signal components. Preferably, amplitude control is provided for each of the first and second output signal portions. In the following, the phase shifted signal component is called the second output signal portion (for reference purposes only). According to an alternative embodiment of the invention, splitting the output signal means that the initial output signal may be directly converted into two signal components having the mutual phase shift to be obtained.

According to a preferred embodiment of the invention, the second output signal portion is created by passing a portion of the output signal of the scattering light detector device through an all-pass filter. Accordingly, the phase shifter device of the s-SNOM apparatus preferably comprises the all-pass filter. The all-pass filter is a signal processing filter that passes all frequencies equally in gain, but changes the phase relationship among various frequencies. Advantageously, phase shifting with the all-pass filter can be implemented with available circuitries with low complexity.

According to an alternative embodiment of the invention, the second output signal portion can be created by passing the output signal through a self-calibrating phase shifter module implemented using a phase-locked loops (PLL) and voltage controlled oscillators (VCOs). Accordingly, the phase shifter device of the s-SNOM apparatus preferably comprises the self-calibrating phase shifter module. This embodiment has the advantage that no calibration adjustments would be necessary over a very wide range of frequencies (approximately an octave).

Particularly preferred, for obtaining a 90° phase shift, the self-calibrating phase shifter module includes a phase-locked loop (PLL) with its voltage controlled oscillator (VCO) set at the 4th harmonic of the original signal component to be phase-shifted. The PLL is combined with a 2-bit counter, that then locks to the original signal component. A resulting first square-wave is used to lock another VCO (pure sinewave in-phase with the original signal component) of the phase shifter module. By adding a one to the digital counter, another VCO can be locked to a second square wave obtained from the other 2-bit counter, to obtain a sine-wave having exactly the required 90° phase-shift.

According to yet another alternative embodiment of the invention, the second output signal portion can be created by a digital signal processing (DSP) module or by employing field-programmable gate arrays (FPGA), processing the output signal of the scattering light detector device. Preferably, a sample rate of at least twice the modulation frequency is provided with the DSP method. With these embodiments, analogue electronics are replaced by digital signal component processing which is functionally equivalent to the analogue module, optionally resulting in advantages by a software control capability of the phase shifter device.

According to a further preferred embodiment of the invention, splitting the output signal is executed such that the first and second output signal portions have equal maximum amplitudes. Creating the equal maximum amplitudes, preferably with the phase shifter device, has advantages for calculating the s-SNOM tip modulation phase $\phi_i$. Calculating the phase $\phi_i$ is even further facilitated if, according to a particularly preferred embodiment of the invention, splitting the output signal is executed (preferably with the phase shifter device) such that the second output signal portion (Y) has a $\pi/2$ phase-shift relative to the first output signal portion (X), and the s-SNOM tip modulation phase $\phi_i$ is calculated by $\phi_i = \arctan(Y/X)$.

Alternatively, splitting the output signal may be executed such that the first and second output signal portions have different maximum amplitudes and/or an arbitrary phase shift. A calibration step is then performed at the data processing stage, with calibration parameters derived from the data itself. One possible advantage of this approach is that it does not require a device calibration step of the phase shifter device. One other advantage of this approach is that it enables the correction of a calibration error, whether due to operation error or non-ideal behaviour of the phase shifter device.

Advantageously, demodulating the scattering light function S for obtaining the s-SNOM near-field signal of interest can be executed with the demodulation device as described in [4]. Preferably, demodulating the scattering light function $S(\phi)$ comprises extracting Fourier coefficients from the scattering light function $S(\phi)$.

Further advantages of the invention are obtained if one or more of the following embodiments are employed. According to a first variant, the output signal can be passed through a band-pass filter before splitting of the output signal. Advantageously, the band-pass filter removes most of the noise included in the output signal of the mechanical oscillation detector device. Additionally or alternatively, the sequence of illumination light pulses is used for creating a sampling clock signal for sampling the scattering light pulse amplitudes $S_i$ and the s-SNOM tip modulation phases $\phi_i$. Advantageously, this sampling clock signal facilitates the subsequent signal processing in the demodulation device.

The inventive scattering-type scanning near field optical microscopy has a broad range of applications, wherein the sample to be investigated is characterized by the s-SNOM near-field signal collected with the invention. Basically, the s-SNOM near-field signal can be employed for characterizing the sample, e. g. the chemical composition thereof, at a single scan position only. The term s-SNOM thus covers also measurements at single surface locations of the sample. However, according to a further preferred embodiment of the invention, the s-SNOM near-field signal is collected at multiple scan positions. Particularly preferred, a sample image is collected by repeating the steps of placing the s-SNOM tip, illuminating the oscillating s-SNOM tip, collecting scattering light pulse amplitudes $S_i$, collecting the s-SNOM tip modulation phases $\phi_i$, and calculating the s-SNOM near-field signal with a plurality of tip positions relative to the sample. To this end, the s-SNOM apparatus preferably is provided with a scanner device being arranged for scanning the s-SNOM tip and the sample relative to each other and for collecting a sample image. Scanning movement is preferably executed in a plane perpendicular to the oscillation movement of the s-SNOM tip. Preferably, the sample is moved relative to the s-SNOM tip for scanning the sample surface.

Another advantage of the invention is that the s-SNOM can be extended by introducing at least one secondary modulation and providing at least one secondary modulation detector device with an associated phase shifter device, providing at least one secondary modulation phase $\phi'_i$ for each of the collected scattering light pulse amplitudes $S_i$ by phase shifting of a portion of an output signal of the at least one secondary modulation detector device, and calculating the s-SNOM near-field signal by demodulating the scattering light function $S'(\phi_i')$ of the scattering light pulse amplitudes $S_i$ in dependency on the s-SNOM tip modulation phase $\phi_i$ and the at least one secondary modulation phases $\phi'_i$. Advantageously, the near-field signal is calculated as a function of the SNOM tip modulation phase and the at least one secondary modulation phase, as outlined below (see equation (2)).

The secondary modulation is a modulation being applied to a step of the s-SNOM method and/or component of the s-SNOM apparatus. The secondary modulation is independent of the primary modulation. The configuration of the secondary modulation detector device depends on the nature of the applied modulation. Advantageously, the use of multiple modulation schemes enables the device to perform advanced near-field signal measurements, e.g. the modulation schemes described in [1]. In particular, the sinusoidal modulation and the triangular modulation disclosed in [1] can be employed as the at least one secondary modulation. Alternatively, a property of the sample can be modulated externally, e.g. by an external (third) illumination source [2,3]. The at least one secondary modulation may have advantages in terms of improving the precision and reliability of characterizing the sample, as well as enabling the characterization of further properties of the sample.

Additionally or alternatively to the at least one secondary modulation, the inventive technique may include providing at least one further light pulse detector device being arranged for collecting at least one further light pulse amplitude $S_i$' scattered at the s-SNOM tip. The illumination device may comprise at least one further light source. At least one further optical signal channel is provided. Advantageously, the multiplicity of detected signals can be combined to improve signal detection, e. g. by employing ratiometry or balanced detection, or to simultaneously measure multiple properties of the scattered light pulses, e.g. different polarizations or wavelengths of the scattered light. The at least one further light pulse detector device may have further advantages in terms of improving the sensitivity and reliability of characterizing the sample, as well as enabling the characterization of further properties of the sample.

Features disclosed in the context of the s-SNOM method and embodiments thereof also represent preferred features of the inventive s-SNOM apparatus and embodiments thereof. The aforementioned aspects and inventive and preferred features, in particular with regard to the configuration of the apparatuses as well as the dimensions and compositions of individual components being described in relation to the apparatuses, also apply for the methods. The preferred embodiments, variants and features of the invention described above are combinable with one another as desired.

Brief description of the drawings

Further details and advantages of the invention are described in the following with reference to the attached drawings, which schematically show in

Figure 1:            an illustration of an s-SNOM apparatus according to preferred embodiments of the invention;

Figures 2 and 3:    further details of a phase shifter device of the s-SNOM apparatus according to Figure 1;

Figure 4:            an illustration of obtaining the scattering light function $S_i(\phi_i)$;

Figure 5:            modulation channels for tapping (A) and reference arm (B) modulation after calibration;

Figure 6:            examples of measuring the scattering light function $S_i(\phi_i)$ and demodulation results obtained with the invention;

Figure 7:            a configuration of the phase shifter device including PLLs; and

Figure 8:            a general illustration of the signal processing according to further embodiments of the invention.

Preferred embodiments of the invention

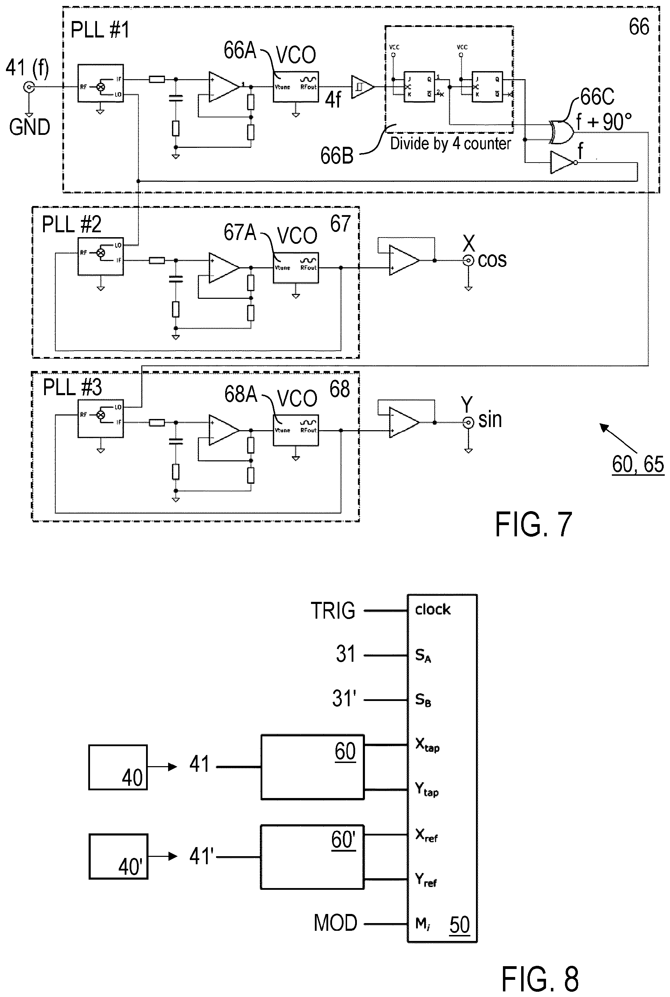

Features of preferred embodiments of the invention are described in the following with particular reference to phase-domain sampling of scattering light pulse amplitudes and demodulating the scattering light function. Details of an s-SNOM apparatus, like the driving of the s-SNOM tip or the analysis of the near-field signal for obtaining sample features, are not described as far as they are known per se from prior art (see e. g. [1]). With regard to the implementation of s-SNOM measurements, employing an interferometer for scattering light detection and the optional introduction of at least one secondary modulation, [1] is introduced to the present disclosure by reference. The invention is not restricted to the particular configurations of the illustrated s-SNOM apparatus, but rather can be varied, e. g. with regard to the configuration of the phase shifter device and/or the introduction of further modulations. For instance, there can be more than one optical signal channel (see e. g. Figure 8), or the phase shift between the first and second output signal portions can be selected in a range deviating from 90°. Signal conditioning can be used if necessary (e. g. filtering, amplification, subtraction, etc.).

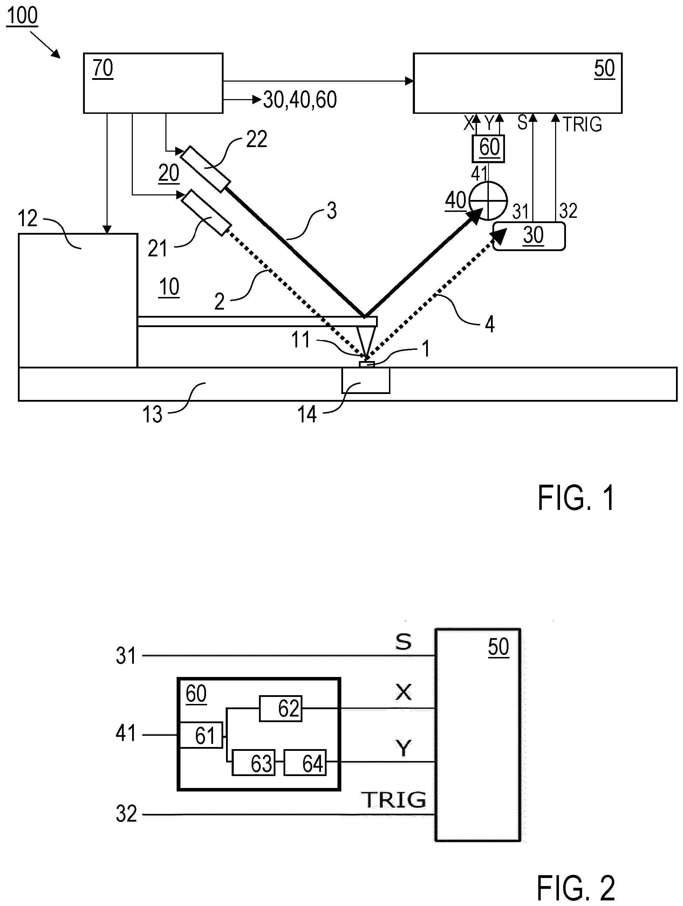

The s-SNOM method can be applied with various modulation conditions. For a standard application, there is one single modulation by the motion of the s-SNOM tip (so called self-homodyne mode, shd mode). Alternatively, there is a primary modulation by the motion of the s-SNOM tip and a secondary modulation by a reference arm (so called pseudo heterodyne mode, pshet mode). Figure 1 and the following description of the s-SNOM apparatus 100 refer in exemplary, not-restricting manner to the shd mode. For applying the pshet mode, the configuration of the s-SNOM apparatus 100 is modified by introducing at least one further modulation as mentioned below (see section Data processing - pseudo-heterodyne mode and Figure 8).

s-SNOM apparatus

Figure 1 schematically shows the s-SNOM apparatus 100, which comprises a scanning near-field optical microscope 10 including an s-SNOM tip 11, an illumination device 20, a scattering light detector device 30, a mechanical oscillation detector device 40, a demodulation device 50, a phase shifter device 60 and a control device 70. The control device 70, like e. g. a computer unit, is arranged for controlling the components of the s-SNOM apparatus 100. Accordingly, it is coupled at least with the scanning near-field optical microscope 10, the illumination device 20, the scattering light detector device 30, the mechanical oscillation detector device 40, the demodulation device 50 and the phase shifter device 60. In practice, the control device 70 can be replaced by or completed with separate control units of the components 10 to 60.

The scanning near-field optical microscope 10 generally has an operation unit 12 including a tip drive unit and a control unit (not shown in detail). The operation unit 12 is fixed in space, e. g. arranged on a support 13. The sample 1 to be investigated is arranged on a substrate holder, which is coupled with a scanning device 14. The scanning device 14 is an x-y-z-table allowing a scanning movement of the sample 1 relative to the support 13 in a horizontal plane (perpendicular to the plane of drawing) while compensating for height variations of the sample in the z direction. The s-SNOM tip 11 is coated with a metallic material, like e. g. Si coated with PtIr alloy or gold and coupled via a deflectable cantilever with the operation unit 12, allowing a tip oscillation in a vertical direction (z-direction) perpendicular to the horizontal plane. The s-SNOM tip 11 is operated in tapping mode with typical oscillation amplitude in the range from 20 nm to 100 nm. With a practical example, the scanning near-field optical microscope 10 is an AFM microscope of the type NeaSnom (manufacturer: NeaSpec, Germany).

The illumination device 20 comprises a first light source 21 for creating illumination light pulses 2 and a second light source 22 for creating an indicator light beam 3. The control device 70 is provided for controlling the operation of the first and second light sources 21, 22. The first light source 21 is a pulsed laser combined with an optical parametric amplifier with a repetition rate of e. g. 200 kHz, a pulse duration of e. g. 30 fs and a centre wavelength of e. g. 633 nm, like e. g. the LC Pharos femtosecond laser combined with the LC ORPHEUS-3H tunable OPA (manufacturer: Light Conversion, Lithuania). The illumination light pulses 2 are directed to the oscillating s-SNOM tip 11, wherein preferably a whole range covered by the tip oscillation is homogeneously illuminated. Scattering light pulses 4 created at the s-SNOM tip 11 are collected with the scattering light detector device 30. Due to the near-field interaction with the sample 1, amplitudes $S_i$ of the scattering light pulses 4 depend on the distance of the s-SNOM tip 11 from the sample 1 (or correspondingly from the phase $\phi_i$ of the tip oscillation). The scattering light detector device 30 is a photoreceiver, like a photodiode, which is fast enough to yield separated impulses for the individual optical scattering light pulses 4. In practice, collecting the scattering light pulses 4 can be executed using an interferometer (not shown), as disclosed e. g. in [1].

The second light source 22 is a continuous wave laser with a wavelength of e. g. 650 nm, like e. g. a laser diode. The indicator light beam 3 is directed to a reflecting section on the cantilever and/or an upper side of the oscillating s-SNOM tip 11 and deflected to the mechanical oscillation detector device 40. Due to the oscillation of the s-SNOM tip 11, the direction of the deflected indicator light beam 3 varies. For sensing the oscillation, the mechanical oscillation detector device 40 comprises a positions-selective photodetector, like a camera or preferably a quadrant photodetector.

The demodulation device 50 includes a data-acquisition card, like e. g. NI USB-6356 (manufacturer: National Instruments Corp., USA) and a calculation circuit. For calculating the s-SNOM tip modulation phases $\phi_i$ and the s-SNOM near-field signal by demodulating the scattering light function $S_i(\phi_i)$ of the scattering light pulse amplitudes $S_i$ in dependency on the s-SNOM tip modulation phases $\phi_i$, the demodulation device 50 is coupled at least with the scattering light detector device 30 and the mechanical oscillation detector device 40, and optionally further with the control device 70.

The output signal 31 of the scattering light detector device 30 is directly input to the demodulation device 50 for obtaining the scattering light pulse amplitudes $S_i$. The scattering light detector device 30 further can be used as a clock source providing an optical trigger signal 32 (clock signal). With the illustrated example, the output signal 31 can be used for providing both of the scattered optical signal to be sensed and the optical trigger. For illustrative reasons, the optical trigger signal 32 is shown as a separate signal. Alternatively, the optical trigger signal 32 can be provided by a separate clock source, including a photodetector sensing the illumination or scattering light pulses 2, 4.

Coupling of the demodulation device 50 with the mechanical oscillation detector device 40 is provided via the phase shifter device 60 (see Figures 2, 4 and 6). The output signal 41 of the mechanical oscillation detector device 40 is input to the phase shifter device 60 for generating first and second output signal portions X, Y as described below.

The demodulation device 50 uses analogue-to-digital converters (ADCs) to sample the electronic signals, including the optical scattering light pulse amplitudes S and the modulation signals X, Y. The ADCs are synchronized with the optical pulses by the use of an adequate sampling clock, in particular the optical trigger signal 31/32. The sampling clock therefore has the same frequency as the optical pulse train. Demodulating the optical scattering light pulse amplitudes S with the demodulation device 50 is described with further details below.

As schematically shown e. g. in Figures 1 to 3, the phase shifter device 60 is arranged for receiving the output signal 41 of the mechanical oscillation detector device 40 and for splitting the output signal 41 into a first output signal portion X and a second output signal portion Y being phase-shifted relative to each other. The phase shifter device 60 of this embodiment comprises a band-pass filter 61, a first buffer 62, an all-pass filter 63 (giving control of the phase) and a second buffer 64.

The band-pass filter 61 is configured for removing most of the broadband noise included in the output signal 41. As an example, the band-pass filter 61 passes signal components in a frequency range of 30 kHz centred on the mechanical oscillation frequency. For calibration purposes, the frequency range of the band-pass filter 61 can be set with the control device 70. The filtered signal is split into two branches after passing the band-pass filter 61. The embodiments of Figures 1 to 3 are described with reference to the self-homodyne mode (see below). For SNOM in pseudoheter-odyne mode, another phase shifter device is used for the reference arm modulation. It is correspondingly adapted for reference arm modulation $V_{ref}$, wherein the band-pass filter is replaced by a broader band-pass filter with switchable gain.

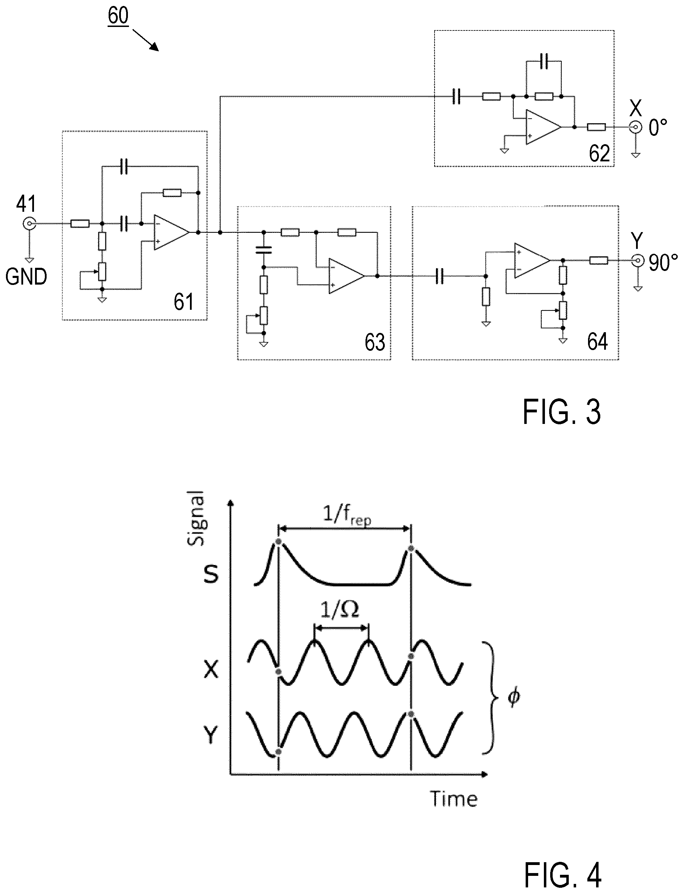

The first branch for providing the first output signal portion X without phase shift (0°) includes the first buffer 62, which is adapted for adjusting the amplitude of the first output signal portion X, e. g. with an amplifier (optionally having an adjustable gain, not shown). The second branch for providing the second output signal portion Y with a phase shift includes the all-pass filter 63 and the second buffer 64, which is adapted for adjusting the amplitude of the second output signal portion Y, again with an amplifier having an adjustable gain. Details of the all-pass filter 63 for a 90° phase shift are illustrated in an exemplary manner in Figure 3. Alternatively, another phase shift amount can be introduced. For calibration purposes, the transition frequency of the all-pass filter 63 can be set with the control device 70 and/or manually with control elements. Setting the amplitudes of the first and second output signal portions X, Y is executed with the control device 70 as well.

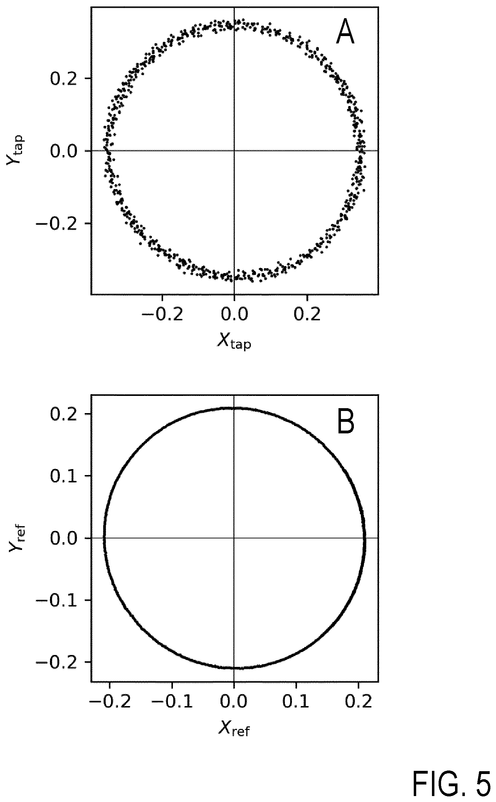

The phase shift between the X and Y channels preferably is set to $\pi/2$ and their amplitudes is set with the buffers 62, 64 to be equal. With these parameters, the two channels correspond to the in-phase and quadrature components of the modulation signal, and a plot of Y vs X shows a circle. Example results of the X-Y-plot for the single modulation channel of shd mode and for reference arm modulation of pshet mode after calibration are shown in Figures 5A and 5B, resp.. Advantageously, the phase $\phi_i$ can be calculated for the i-th sampled optical pulse as

$$\phi_i = \text{arc tan} \, (Y_i/X_i).$$

Alternative choices of the phase shifts and amplitudes are possible, as detailed below.

Preferably, the phase shifter device 60 is calibrated externally before the measurement with the sample 1. The calibration is performed each time the frequency of the modulation is changed significantly. The calibration steps preferably comprise adjusting the band-pass filter 61 to maximize the amplitude of output X, adjusting the all-pass filter 63 to obtain a $\pi/2$ phase shift between Y and X, and using the output buffer 64 with adjustable gain for adjusting the amplitude of Y to match the amplitude of X.

Data processing - self-homodyne mode

For the standard SNOM in self-homodyne (shd) mode, there is a single modulation of the scattering light pulse amplitudes $S_i$ provided by the motion of the s-SNOM tip 11. Figure 4 schematically illustrates the sampling process for obtaining the scattering light pulse amplitudes $S_i$. The optical signal 31/S is sampled simultaneously with the modulation components, i. e. the first and second output signal portions X, Y. Vertical lines indicate sampling triggers. Accordingly, for the i-th illumination light pulse 2, the scattering light pulse amplitude $S_i$ and the associated amplitudes of the first and second output signal portions $X_i$, $Y_i$ are collected. The current modulation phase $\phi_i$ of the i-th scattering light pulse is obtained from the first and second output signal portions $X_i$, $Y_i$, which are sampled synchronously with the scattering light pulse amplitudes. The measurements from individual pulses are recorded, resulting in a data set $S_i(\phi_i)$, e. g. with i = 1 to 50 000 for a given location of the sample surface. It is noted that the total number of points can be selected depending on signal quality, wherein a lower limit may be 10 000 or even 5000 pts, while there is no technical upper limit.

The acquired data set is transformed into the demodulated signal, for example the near-field signal (SNOM signal), as follows. After calculating the phases $\phi_i$ of the modulations, Fourier coefficients u of the optical signals $S_i$ are extracted. The resulting amplitudes are the near-field signal to be obtained, and they correspond to the results from conventional lock-in detection.

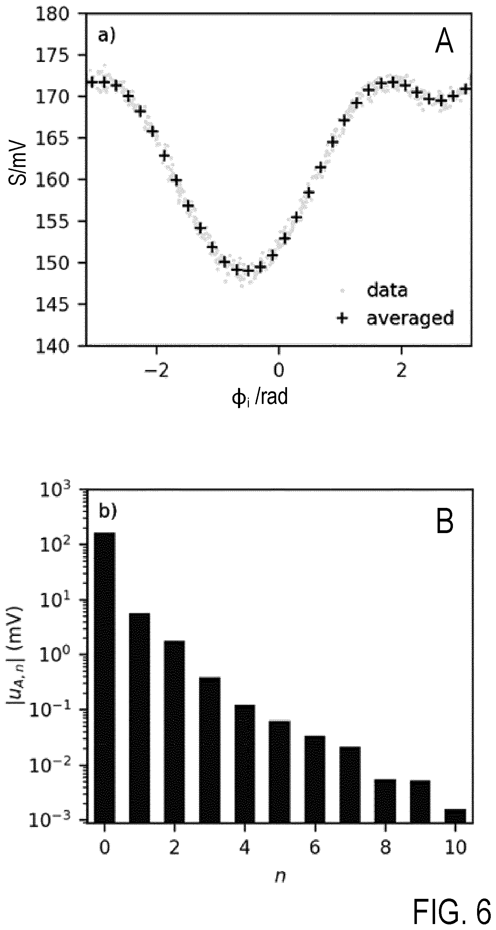

Figure 6 shows a shd mode dataset at various stages of processing. The raw data is obtained from the s-SNOM apparatus 100, as shown in Figure 1. Using the s-SNOM apparatus 100, the tapping phase $\phi_i$ is calculated as $\phi_i = \text{arc tan} \, (Y_i/X_i)$. The signal $S_i$ vs $\phi_i$ is shown in Figure 6A. Demodulation is performed by extracting the Fourier coefficients $u_n$ from $S(\phi)$, obtained from $S_i$ e.g. by a binning algorithm, according to the equation:

$$u_n = \frac{1}{2\pi} \oint_{2\pi} S(\phi) \exp[-in\phi] \, d\phi \qquad (1)$$

where $u_n$ is the coefficient for order n and i is the index of the illumination light pulses. In the case of shd-SNOM, $|u_n|$ is the SNOM signal of order $n$ (ie: at frequency $f = n\Omega$).

The inventors have found that the demodulation can be performed numerically despite the irregular sampling of the phases $\phi_i$. Direct Fourier transform (DFT) and binning ([4]) can be employed for numerically executing the demodulation. The DFT algorithm performs the integration in eq (1) numerically using known techniques, such as Trapezoidal integration. For shd-SNOM, the inventors have found this algorithm to be simple and robust. In the binning algorithm, the dataset is first regularized to a constant spacing by binning. Every data point is assigned a bin according to its phase $\phi_i$, like in a histogram. The average of the signal S is then computed for every bin. The results are shown in Figure 6A using crosses. As the data is regularly spaced, the Fourier coefficients are then extracted by standard Fast Fourier Transform (FFT) algorithms. The resulting amplitudes are shown in Figure 6B. Advantageously, this algorithm is faster and yields higher quality data than DFT. Furthermore, it can be generalized to higher dimensions.

Auxiliary calculations can be performed at any point. For example, based on a stochastic analysis, one can remove improper sample points. As another example, one can compute the difference between two signals $S_d = S_A - S_B$ and analyze $S_d$ alongside the other existing channels. In another case, it is possible to group the data using some criterion (e. g. the value of a further modulation $M_i$, see Figure 8) and perform the analysis separately on the subset of data.

Data processing - pseudo-heterodyne mode

pshet-SNOM employs a secondary modulation, which is introduced by using an interferometer for sensing the scattered light and modulating the length of an interferometer arm (see e. g. [1]). This length modulation is sensed by a secondary modulation detector device, sensing e. g. a position of an interferometer mirror or a driving voltage of an actor moving the mirror, and a further phase-shifter device. The secondary modulation detector device is completely unrelated to the mechanical oscillation detector device.

For pshet-SNOM, the analysis proceeds in an analogue manner, but with two dimensions. The raw data is obtained from the s-SNOM apparatus 100 being adapted for the pshet mode. The phases are calculated as $\phi_i = \arctan(Y_i/X_i)$ for the mechanical oscillation and $\phi'_i = \arctan(Y'_i/X'_i)$ for the reference modulation. The coefficients are extracted using the two-dimensional equivalent of equation (1):

$$u_{n,m} = \frac{1}{4\pi^2} \oiint_{2\pi, 2\pi} S(\phi, \phi') \exp[-i(n\phi + m\phi')] \, d\phi d\phi' \qquad (2)$$

where $u_{n,m}$ is the coefficient of orders $n$, m. In the case of pshet SNOM, the coefficients $|u_{n,m}|$ are equivalent to the pshet side-bands amplitudes (ie: at $f = n\Omega + mM$).

In principle, multiple available algorithms can be used. A 2D equivalent of the DFT algorithm is possible but inefficient. The binning algorithm is straightforward to generalize. The points are partitioned into a 2D histogram using the values of $\phi_i$ and $\phi'_i$. The average for each bin is computed. The coefficients $u_{n,m}$ are obtained using the 2D Fourier transform.

Alternative embodiments

According to an alternative embodiment of the invention, the phase shifter device 60 is provided by a self-calibrating phase shifter module 65 as shown in Figure 7, instead of the components 61 to 64 of Figure 3. The phase shifter module 65 includes a first PLL circuit 66, a second PLL circuit 67 and a third PLL circuit 68, each including a VCO 66A, 67A and 68A, resp.. The output signal 41 of the mechanical oscillation detector device 40 with the oscillation frequency f of the s-SNOM tip 11 is input to the first PLL circuit 66. Optionally, the output signal 41 may be frequency filtered with a band-pass filter 61 (see e. g. Figure 3). The VCO 66A of the first PLL circuit 66 creates a signal component with 4f, on the basis of which a first square wave signal with f + 90° and a second square wave signal with f are created, using a divide by 4 counter 66B combined with an adder 66C. The square wave signals are used for creating a cosine wave and a sine wave with the second and third PLL circuits 67, 68. After amplification, the cosine and sine waves are output as the first and second output signal portions X, Y with exact 90° phase shift.

The inventors have found, that the inventive s-SNOM method can be executed with one or more optical signal channels. Figure 8 illustrates a generalized version of the demodulation device 50 being configured for receiving e. g. two optical scattering signals 31, 31' and two modulations signals 41, 41', a clock signal TRIG and at least one further auxiliary modulation signal component MOD. The optical scattering signals 31, 31' comprise scattering light pulse amplitudes collected via two different optical signal channels. The modulation signal 41 represents the primary modulation introduced by the mechanical oscillation of the s-SNOM tip and sensed by the mechanical oscillation detector device 40. The modulation signal 41' represents the secondary modulation introduced by a variation of an interferometer arm length and sensed by a secondary modulation detector device 40'. With the demodulation device 50, e. g. the pshet mode can be executed. As a further example, the first optical scattering signal 31 comprises the output signal of the scattering light detector device 30 as described above, and the second optical scattering signal 31' comprises the output signal of a second photo-sensor of the scattering light detector device 30 being arranged for collecting scattering light along a different optical path (e. g. having a different direction and/or using different optical elements in the optical path). Using the first and second optical scattering signals may have advantages for improving the sensitivity and reliability of the s-SNOM apparatus 100.

For the multiple modulations, independent phase shifter devices 60, 60' are provided, each being tailored to one of the modulations. Each phase shifter device 60, 60' may contain signal conditioning electronics, like the band-pass filter 61 (see Figure 1). If multiple signals are present, the collected data are processed and analyzed in the same way as described above.

**Claims**

1.    Method of scattering-type scanning near-field optical microscopy (s-SNOM), comprising the steps of

- placing an s-SNOM tip (11) at a near-field distance from a sample (1) to be investigated and subjecting the s-SNOM tip (11) to a mechanical oscillation, which provides a primary modulation,

- illuminating the oscillating s-SNOM tip (11) with a sequence of illumination light pulses, wherein each of the illumination light pulses hits the s-SNOM tip (11) at a specific s-SNOM tip modulation phase $\phi_i$ of the mechanical oscillation,

- collecting scattering light pulse amplitudes $S_i$, each being created by scattering one of the illumination light pulses at the s-SNOM tip (11), using a scattering light detector device (30),

- collecting the s-SNOM tip modulation phase $\phi_i$ associated to each of the collected scattering light pulse amplitudes $S_i$, using a mechanical oscillation detector device (40), and

- calculating an s-SNOM near-field signal by demodulating a scattering light function $S(\phi_i)$ of the scattering light pulse amplitudes $S_i$ in dependency on the s-SNOM tip modulation phases $\phi_i$, **characterized in that** each of the s-SNOM tip modulation phases $\phi_i$ is obtained by the steps of

- splitting an output signal of the mechanical oscillation detector device (40) into a first output signal portion (X) and a second output signal portion (Y) being phase-shifted relative to the first output signal portion (X), wherein the output signal is split with a phase shifter device (60) coupled with the mechanical oscillation detector device (40), and

- calculating the s-SNOM tip modulation phase $\phi_i$ of the primary modulation from the first and second output signal portions (X, Y) using a demodulation device (50).

2.    Method according to claim 1, wherein

- the second output signal portion (Y) is created by passing a portion of the output signal of the mechanical oscillation detector device (40) through an all-pass filter (63).

3.    Method according to claim 1, wherein

- the second output signal portion (Y) is created by passing the output signal of the mechanical oscillation detector device (40) through a self-calibrating phase shifter module (65) implemented with phase-locked loops (PLL) and voltage controlled oscillators (VCOs).

4.    Method according to claim 1, wherein

- the second output signal portion (Y) is created by a digital signal processing (DSP) module and/or by employing field-programmable gate arrays (FPGA).

5.    Method according to one of the foregoing claims, wherein

- splitting the output signal is executed such that the first and second output signal portions (X, Y) have equal maximum amplitudes.

6. Method according to claim 5, wherein

- splitting the output signal is executed such that the second output signal portion (Y) has a $\pi/2$ phase-shift relative to the first output signal portion (X), and
- the s-SNOM tip modulation phase $\phi_i$ is calculated by $\phi_i = \arctan(Y/X)$.

7. Method according to one of the foregoing claims, wherein

- demodulating the scattering light function $S(\phi)$ comprises extracting Fourier coefficients from the scattering light function $S(\phi)$.

8. Method according to one of the foregoing claims, including at least one of the features

- the output signal is passed through a band-pass filter (61) before splitting of the output signal,
- the sequence of illumination light pulses is used for creating a sampling clock signal for sampling the scattering light pulse amplitudes $S_i$ and the s-SNOM tip modulation phases $\phi_i$, and
- a sample image is collected by repeating the steps of placing the s-SNOM tip (11), illuminating the oscillating s-SNOM tip (11), collecting scattering light pulse amplitudes $S_i$, collecting the s-SNOM tip modulation phases $\phi_i$, and calculating the s-SNOM near-field signal with a plurality of tip positions relative to the sample (1).

9. Method according to one of the foregoing claims, further comprising

- introducing at least one secondary modulation to the s-SNOM method and providing at least one secondary modulation detector device (40'),
- providing at least one secondary modulation phase $\phi'_i$ for each of the collected scattering light pulse amplitudes $S_i$ by phase shifting of a portion of an output signal of the at least one secondary modulation detector device (40'), and
- calculating the s-SNOM near-field signal by demodulating the scattering light function $S'(\phi_i')$ of the scattering light pulse amplitudes $S_i$ in dependency on the s-SNOM tip modulation phase $\phi_i$ and the at least one secondary modulation phases $\phi'_i$.

10. Scanning near-field optical microscopy (s-SNOM) apparatus (100), being configured for scattering-type scanning near-field optical microscopy, comprising

- a scanning near-field optical microscope (10) including an s-SNOM tip (11) being configured for a placement at a near-field distance from a sample (1) to be investigated, while being subjected to a mechanical oscillation, which provides a primary modulation,
- an illumination device (20) being arranged for illuminating the oscillating s-SNOM tip (11) with a sequence of illumination light pulses, wherein each of the illumination light pulses hits the s-SNOM tip (11) at a specific s-SNOM tip modulation phase $\phi_i$ of the mechanical oscillation,
- a scattering light detector device (30) being arranged for collecting scattering light pulse amplitudes $S_i$, each of which being created by scattering one of the illumination light pulses at the s-SNOM tip (11),
- a mechanical oscillation detector device (40) being arranged for collecting the s-SNOM tip modulation phase $\phi_i$ associated to each of the collected scattering light pulse amplitudes $S_i$, and
- a demodulation device (50) being arranged for calculating an s-SNOM near-field signal by demodulating a scattering light function $S(\phi_i)$ of the scattering light pulse amplitudes $S_i$ in dependency on the s-SNOM tip modulation phases $\phi_i$,
**characterized in that**
- the mechanical oscillation detector device (40) is coupled with a phase shifter device (60), wherein
- the phase shifter device (60) is configured for splitting an output signal of the mechanical oscillation detector device (40) into a first output signal portion (X) and a second output signal portion (Y) being phase-shifted relative to the first output signal portion (X), and
- the demodulation device (50) is configured for calculating the s-SNOM tip modulation phases $\phi_i$ of the primary modulation from the first and second output signal portions (X, Y).

**11.** s-SNOM apparatus according to claim 10, wherein

- the phase shifter device (60) comprises an all-pass filter (63), a self-calibrating phase shifter module (65) implemented using a phase-locked loops (PLL) and voltage controlled oscillators (VCOs), a digital signal processing (DSP) module or a field-programmable gate arrays (FPGA).

**12.** s-SNOM apparatus according to one of the claims 10 to 11, wherein

- the phase shifter device (60) is configured for splitting the output signal such that the first and second output signal portions (X, Y) have equal maximum amplitudes.

**13.** s-SNOM apparatus according to claim 12, wherein

- the phase shifter device (60) is configured for splitting the output signal such that the second output signal portion (Y) has a $\pi/2$ phase-shift relative to the first output signal portion (X), and
- the demodulation device (50) is configured for calculating the s-SNOM tip modulation phase $\phi_i$ by $\phi_i = \arctan (Y/X)$.

**14.** s-SNOM apparatus according to one of the claims 10 to 13, wherein

- the demodulation device (50) is configured for demodulating the scattering light function $S(\phi)$ by extracting Fourier coefficients from the scattering light pulse amplitudes $S(\phi)$.

**15.** s-SNOM apparatus according to one of the claims 10 to 14, including at least one of the features

- a band-pass filter (61) is arranged between the mechanical oscillation detector device (40) and the phase shifter device (60),
- a sampling clock source (31) is coupled with the scattering light detector device (30) and the mechanical oscillation detector device (40), wherein the sampling clock source (31) is arranged for creating a sampling clock signal for sampling the scattering light pulse amplitudes $S_i$ and the s-SNOM tip modulation phases $\phi_i$, and
- a scanner device (14) is arranged for scanning the s-SNOM tip (11) and the sample (1) relative to each other and for collecting a sample image.

**16.** s-SNOM apparatus according to one of the claims 10 to 15, wherein

- the scanning near-field optical microscope (10) is configured for introducing at least one secondary modulation,
- at least one secondary modulation detector device (40') is coupled with at least one further phase shifter device (60') being arranged for providing at least one secondary modulation phase $\phi'_i$ for each of the collected scattering light pulse amplitudes $S_i$ by phase shifting of a portion of an output signal of the at least one secondary modulation detector device (40'), and
- the demodulation device (50) is configured for calculating the s-SNOM near-field signal by demodulating the scattering light function $S'(\phi)$ of the scattering light pulse amplitudes $S$ in dependency on the s-SNOM tip modulation phase $\phi_i$ and the at least one secondary modulation phases $\phi'_i$.

**Patentansprüche**

**1.** Verfahren einer optischen Streutyp-Nahfeldrastermikroskopie (s-SNOM), umfassend die Schritte

- Platzieren einer s-SNOM-Spitze (11) in einem Nahfeldabstand zu einer zu untersuchenden Probe (1) und Beaufschlagen der s-SNOM-Spitze (11) mit einer mechanischen Oszillation, die eine Primärmodulation bereitstellt,
- Beleuchten der oszillierenden s-SNOM-Spitze (11) mit einer Sequenz von Beleuchtungslichtpulsen, wobei jeder der Beleuchtungslichtpulse die s-SNOM-Spitze (11) in einer bestimmten s-SNOM-Spitzen-Modulationsphase $\phi_i$ der mechanischen Oszillation trifft,
- Aufnehmen von Streulichtpulsamplituden $S_i$, die jeweils durch Streuung eines der Beleuchtungslichtpulse an der s-SNOM-Spitze (11) erzeugt werden, unter Verwendung einer Streulicht-Detektoreinrichtung (30),
- Aufnehmen der s-SNOM-Spitzen-Modulationsphase $\phi_i$, die mit jeder der gesammelten Streulichtpulsam-

plituden $S_i$ verbunden ist, unter Verwendung einer mechanischen Oszillations-Detektoreinrichtung (40), und

- Berechnen eines s-SNOM-Nahfeldsignals durch Demodulieren einer Streulichtfunktion $S(\phi_i)$ der Streulichtpulsamplituden $S_i$ in Abhängigkeit von den s-SNOM-Spitzen-Modulationsphasen $\phi_i$, **dadurch gekennzeichnet, dass** jede der s-SNOM-Spitzen-Modulationsphasen $\phi_i$ durch die Schritte erhalten wird

- Aufteilen eines Ausgangssignals der mechanischen Oszillations-Detektoreinrichtung (40) in einen ersten Ausgangssignalanteil (X) und einen zweiten Ausgangssignalanteil (Y), der relativ zu dem ersten Ausgangssignalanteil (X) phasenverschoben ist, wobei das Ausgangssignal mit einer Phasenverschieber-Einrichtung (60) aufgeteilt wird, die mit der mechanischen Oszillations-Detektoreinrichtung (40) gekoppelt ist, und

- Berechnen der s-SNOM-Spitzen-Modulationsphase $\phi_i$ der Primärmodulation aus dem ersten und zweiten Ausgangssignalanteil (X, Y) unter Verwendung einer Demodulationseinrichtung (50).

2. Verfahren nach Anspruch 1, wobei

- der zweite Ausgangssignalanteil (Y) zum Erzeugen eines Teils des Ausgangssignals der mechanischen Oszillations-Detektoreinrichtung (40) durch ein Allpassfilter (63) geleitet wird.

3. Verfahren nach Anspruch 1, wobei

- der zweite Ausgangssignalanteil (Y) durch Leiten des Ausgangssignals der mechanischen Oszillations-Detektoreinrichtung (40) durch ein selbst-kalibrierendes Phasenverschieber-Modul (65) erzeugt wird, das mit phasenverriegelten Schleifen (PLL) und spannungsgesteuerten Oszillatoren (VCOs) implementiert ist.

4. Verfahren nach Anspruch 1, wobei

- der zweite Ausgangssignalanteil (Y) durch ein digitales Signalverarbeitungsmodul (DSP) und/oder durch Verwendung von feldprogrammierbaren Gate-Arrays (FPGA) erzeugt wird.

5. Verfahren nach einem der vorhergehenden Ansprüche, wobei

- das Aufteilen des Ausgangssignals so durchgeführt wird, dass der erste und der zweite Ausgangssignalanteil (X, Y) gleiche Maximalamplituden aufweisen.

6. Verfahren nach Anspruch 5, wobei

- das Aufteilen des Ausgangssignals so durchgeführt wird, dass der zweite Ausgangssignalanteil (Y) eine $\pi/2$-Phasenverschiebung gegenüber dem ersten Ausgangssignalanteil (X) aufweist, und

- die s-SNOM-Spitzen-Modulationsphase $\phi_i$ berechnet wird durch $\phi_i = \arctan(Y/X)$.

7. Verfahren nach einem der vorhergehenden Ansprüche, wobei

- das Demodulieren der Streulichtfunktion $S(\phi)$ ein Extrahieren von Fourier-Koeffizienten aus der Streulichtfunktion $S(\phi)$ umfasst.

8. Verfahren nach einem der vorhergehenden Ansprüche, umfassend mindestens eines der Merkmale

- das Ausgangssignal wird vor dem Aufteilen des Ausgangssignals durch ein Bandpassfilter (61) geführt,

- die Sequenz von Beleuchtungslichtpulsen wird zum Erzeugen eines Abtasttaktsignals zum Abtasten der Streulichtpulsamplituden $S_i$ und der s-SNOM-Spitzen-Modulationsphasen $\phi_i$ verwendet, und

- ein Probenbild wird aufgenommen, indem die Schritte des Platzierens der s-SNOM-Spitze (11), des Beleuchtens der oszillierenden s-SNOM-Spitze (11), des Sammelns der Streulichtpulsamplituden $S_i$, des Sammelns der s-SNOM-Spitzen-Modulationsphasen $\phi_i$ und des Berechnens des s-SNOM-Nahfeldsignals mit einer Mehrzahl von Spitzenpositionen relativ zu der Probe (1) wiederholt werden.

9. Verfahren nach einem der vorhergehenden Ansprüche, ferner umfassend

- Einführen mindestens einer sekundären Modulation in das s-SNOM-Verfahren und Bereitstellen mindestens einer sekundären Modulations-Detektoreinrichtung (40'),

- Bereitstellen mindestens einer sekundären Modulationsphase $\phi'_i$ für jede der gesammelten Streulichtpulsam-

plituden $S_i$ durch Phasenverschiebung eines Teils eines Ausgangssignals der mindestens einen sekundären Modulationsdetektoreinrichtung (40'), und

- Berechnen des s-SNOM-Nahfeldsignals durch Demodulieren der Streulichtfunktion $S'(\phi'_i)$ der Streulicht-pulsamplituden $S_i$ in Abhängigkeit von der s-SNOM-Spitzen-Modulationsphase $\phi_i$ und der mindestens einen sekundären Modulationsphase $\phi'_i$.

10. Optische Streutyp-Nahfeldrastermikroskopie -(s-SNOM)-Vorrichtung (100), die für eine optische Streutyp-Rasternahfeldmikroskopie konfiguriert ist, umfassend

- ein optisches Nahfeldrastermikroskop (10), das eine s-SNOM-Spitze (11) umfasst, die für eine Platzierung in einem Nahfeldabstand von einer zu untersuchenden Probe (1) konfiguriert ist, während sie mit einer mechanischen Oszillation beaufschlagt wird, die eine Primärmodulation bereitstellt,
- eine Beleuchtungseinrichtung (20), die zur Beleuchtung der oszillierenden s-SNOM-Spitze (11) mit einer Sequenz von Beleuchtungslichtpulsen angeordnet ist, wobei jeder der Beleuchtungslichtpulse die s-SNOM-Spitze (11) in einer bestimmten s-SNOM-Spitzen-Modulationsphase $\phi_i$ der mechanischen Oszillation trifft,
- eine Streulicht-Detektoreinrichtung (30), die zur Aufnahme von Streulichtpulsamplituden $S_i$ angeordnet ist, von denen jede durch Streuung eines der Beleuchtungslichtpulse an der s-SNOM-Spitze (11) erzeugt wird,
- eine mechanische Oszillations-Detektoreinrichtung (40), die zur Aufnahme der s-SNOM-Spitzen-Modulations-phase $\phi_i$ angeordnet ist, die jeder der gesammelten Streulichtpulsamplituden $S_i$ zugeordnet ist, und
- eine Demodulationseinrichtung (50), die zur Berechnung eines s-SNOM-Nahfeldsignals durch Demodulieren einer Streulichtfunktion $S(\phi_i)$ der der Streulichtpulsamplituden $S_i$ in Abhängigkeit von den s-SNOM-Spitzen-Modulationsphasen $\phi_i$ angeordnet ist,
**dadurch gekennzeichnet, dass**
- die mechanische Oszillations-Detektoreinrichtung (40) mit einer Phasenverschieber-Einrichtung (60) gekoppelt ist, wobei
- die Phasenverschieber-Einrichtung (60) zum Aufteilen eines Ausgangssignals der mechanischen Oszillations-Detektoreinrichtung (40) in einen ersten Ausgangssignalanteil (X) und einen zweiten Ausgangssignalanteil (Y) konfiguriert ist, der gegenüber dem ersten Ausgangssignalanteil (X) phasenverschoben ist, und
- die Demodulationseinrichtung (50) zur Berechnung der s-SNOM-Spitzen-Modulationsphasen $\phi_i$ der Primär-modulation aus dem ersten und zweiten Ausgangssignalanteil (X, Y) konfiguriert ist.

11. s-SNOM-Vorrichtung nach Anspruch 10, wobei

- die Phasenverschieber-Einrichtung (60) einen Allpassfilter (63), ein selbst-kalibrierendes Phasenverschieber-Modul (65), das unter Verwendung einer phasenverriegelten Schleife (PLL) und spannungsgesteuerter Oszillatoren (VCOs) implementiert ist, ein digitales Signalverarbeitungsmodul (DSP) oder ein feldprogrammierbares Gate-Array (FPGA) umfasst.

12. s-SNOM-Vorrichtung nach einem der Ansprüche 10 bis 11, wobei

- die Phasenverschieber-Einrichtung (60) so zum Aufteilen des Ausgangssignals konfiguriert ist, dass der erste und der zweite Ausgangssignalanteil (X, Y) gleiche Maximalamplituden aufweisen.

13. s-SNOM-Vorrichtung nach Anspruch 12, wobei

- die Phasenverschieber-Einrichtung (60) so zum Aufteilen des Ausgangssignals konfiguriert ist, dass der zweite Ausgangssignalanteil (Y) eine $\pi/2$-Phasenverschiebung gegenüber dem ersten Ausgangssignalanteil (X) aufweist, und
- die Demodulationseinrichtung (50) konfiguriert ist zum Berechnen der s-SNOM-Spitzen-Modulationsphase $\phi_i$ durch $\phi_i = \arctan(Y/X)$.

14. s-SNOM-Vorrichtung nach einem der Ansprüche 10 bis 13, wobei

- die Demodulationseinrichtung (50) zum Demodulieren der Streulichtfunktion $S(\phi)$ durch Extraktion von Fourierkoeffizienten aus den Streulichtpulsamplituden $S(\phi)$ konfiguriert ist.

15. s-SNOM-Vorrichtung nach einem der Ansprüche 10 bis 14, umfassend mindestens eines der Merkmale

- zwischen der mechanischen Oszillations-Detektoreinrichtung (40) und der Phasenverschieber-Einrichtung (60) ist ein Bandpassfilter (61) angeordnet,
- eine Abtasttaktquelle (31) ist mit der Streulicht-Detektoreinrichtung (30) und der mechanischen Oszillations-Detektoreinrichtung (40) gekoppelt, wobei die Abtasttaktquelle (31) zum Erzeugen eines Abtasttaktsignals zum Abtasten der Streulichtpulsamplituden $S_i$ und der s-SNOM-Spitzen-Modulationsphasen $\phi_i$ angeordnet ist, und
- eine Abtastvorrichtung (14) ist zum Abtasten der s-SNOM-Spitze (11) und der Probe (1) relativ zueinander und zum Sammeln eines Probenbilds angeordnet.

16. s-SNOM-Vorrichtung nach einem der Ansprüche 10 bis 15, wobei

- das optische Nahfeldrastermikroskop (10) zum Einbringen mindestens einer Sekundärmodulation konfiguriert ist,
- mindestens eine Sekundärmodulations-Detektoreinrichtung (40') mit mindestens einer weiteren Phasenverschieber-Einrichtung (60') gekoppelt ist, die angeordnet ist, mindestens eine Sekundärmodulationsphase $\phi'_i$ für jede der gesammelten Streulichtpulsamplituden $S_i$ durch Phasenverschiebung eines Teils eines Ausgangssignals der mindestens einen Sekundärmodulations-Detektoreinrichtung (40') bereitzustellen, und
- die Demodulationseinrichtung (50) zur Berechnung des s-SNOM-Nahfeldsignals durch Demodulieren der Streulichtfunktion $S'(\phi)$ der Streulichtpulsamplituden $S$ in Abhängigkeit von der s-SNOM-Spitzen-Modulationsphase $\phi_i$ und der mindestens einen sekundären Modulationsphase $\phi'_i$ konfiguriert ist.

**Revendications**

1. Procédé de microscopie optique en champ proche de type à diffusion (s-SNOM), comprenant les étapes suivantes

- le placement d'une pointe s-SNOM (11) à une distance de champ proche d'un échantillon (1) à examiner et la soumission de la pointe s-SNOM (11) à une oscillation mécanique, qui fournit une modulation primaire,
- l'éclairage de la pointe s-SNOM (11) oscillante avec une séquence d'impulsions de lumière d'éclairage, dans lequel chacune des impulsions de lumière d'éclairage frappe la pointe s-SNOM (11) à une phase de modulation $\phi_i$ spécifique de pointe s-SNOM de l'oscillation mécanique,
- la collecte d'amplitudes $S_i$ d'impulsions de lumière de diffusion, chacune étant créée par la diffusion de l'une des impulsions de lumière d'éclairage au niveau de la pointe s-SNOM (11), en utilisant un dispositif (30) de détection de lumière de diffusion,
- la collecte de la phase de modulation $\phi_i$ de pointe s-SNOM associée à chacune des amplitudes $S_i$ d'impulsions de lumière de diffusion collectées, en utilisant un dispositif (40) de détection d'oscillation mécanique, et
- le calcul d'un signal en champ proche s-SNOM par démodulation d'une fonction de lumière de diffusion $S(\phi_i)$ des amplitudes $S_i$ d'impulsions de lumière de diffusion en fonction des phases de modulation $\phi_i$ de pointe s-SNOM, **caractérisé en ce que** chacune des phases de modulation $\phi_i$ de pointe s-SNOM est obtenue par les étapes suivantes
- la séparation d'un signal de sortie du dispositif (40) de détection d'oscillation mécanique en une première partie de signal de sortie (X) et une seconde partie de signal de sortie (Y) qui est déphasée par rapport à la première partie de signal de sortie (X), dans lequel le signal de sortie est séparé avec un dispositif de déphasage (60) couplé au dispositif (40) de détection d'oscillation mécanique, et
- le calcul de la phase de modulation $\phi_i$ de pointe s-SNOM de la modulation primaire à partir des première et seconde parties de signal de sortie (X, Y) en utilisant un dispositif de démodulation (50).

2. Procédé selon la revendication 1, dans lequel

- la seconde partie de signal de sortie (Y) est créée en faisant passer une partie du signal de sortie du dispositif (40) de détection d'oscillation mécanique à travers un filtre passe-tout (63).

3. Procédé selon la revendication 1, dans lequel

- la seconde partie de signal de sortie (Y) est créée en faisant passer le signal de sortie du dispositif (40) de détection d'oscillation mécanique à travers un module de déphaseur (65) à auto-étalonnage mis en œuvre avec des boucles à verrouillage de phase (PLL) et des oscillateurs commandés en tension (VCO).

4. Procédé selon la revendication 1, dans lequel

- la seconde partie de signal de sortie (Y) est créée par un module de traitement de signal numérique (DSP) et/ou par l'utilisation de circuits intégrés prédiffusés programmables (FPGA).

5. Procédé selon l'une des revendications précédentes, dans lequel

- la séparation du signal de sortie est exécutée de telle sorte que les première et seconde parties de signal de sortie (X, Y) présentent des amplitudes maximales égales.

6. Procédé selon la revendication 5, dans lequel

- la séparation du signal de sortie est exécutée de telle sorte que la seconde partie de signal de sortie (Y) présente un déphasage $\pi/2$ par rapport à la première partie de signal de sortie (X), et
- la phase de modulation $\phi_i$ de pointe s-SNOM est calculée par $\phi_i = \arctan (Y/X)$.

7. Procédé selon l'une des revendications précédentes, dans lequel

- la démodulation de la fonction de lumière de diffusion $S(\phi)$ comprend l'extraction de coefficients de Fourier à partir de la fonction de lumière de diffusion $S(\phi)$.

8. Procédé selon l'une des revendications précédentes, comprenant au moins l'une des caractéristiques suivantes

- le signal de sortie est passé à travers un filtre passe-bande (61) avant séparation du signal de sortie,
- la séquence d'impulsions de lumière d'éclairage est utilisée pour créer un signal d'horloge d'échantillonnage pour l'échantillonnage des amplitudes $S_i$ d'impulsions de lumière de diffusion et des phases de modulation $\phi_i$ de pointe s-SNOM, et
- une image d'échantillon est collectée en répétant les étapes de placement de la pointe s-SNOM (11), d'éclairage de la pointe s-SNOM (11) oscillante, de collecte d'amplitudes $S_i$ d'impulsions de lumière de diffusion, de collecte des phases de modulation $\phi_i$ de pointe s-SNOM, et de calcul du signal en champ proche s-SNOM avec une pluralité de positions de pointe par rapport à l'échantillon (1).

9. Procédé selon l'une des revendications précédentes, comprenant en outre

- l'introduction d'au moins une modulation secondaire au procédé s-SNOM et la fourniture d'au moins un dispositif (40') de détection de modulation secondaire,
- la fourniture d'au moins une phase de modulation secondaire $\phi'_i$, pour chacune des amplitudes $S_i$ d'impulsions de lumière de diffusion collectées par déphasage d'une partie d'un signal de sortie de l'au moins un dispositif (40') de détection de modulation secondaire, et
- le calcul du signal en champ proche s-SNOM en démodulant la fonction de lumière de diffusion $S'(\phi'_i)$ des amplitudes $S_i$ d'impulsions de lumière de diffusion en fonction de la phase de modulation $\phi_i$ de pointe s-SNOM et des au moins une phases de modulation secondaires $\phi'_i$.

10. Appareil (100) de microscopie optique en champ proche (s-SNOM), configuré pour une microscopie optique en champ proche de type à diffusion, comprenant

- un microscope optique en champ proche (10) comprenant une pointe s-SNOM (11) configurée pour être placée à une distance de champ proche d'un échantillon (1) à examiner, tout en étant soumise à une oscillation mécanique, qui fournit une modulation primaire,
- un dispositif d'éclairage (20) agencé pour éclairer la pointe s-SNOM (11) oscillante avec une séquence d'impulsions de lumière d'éclairage, dans lequel chacune des impulsions de lumière d'éclairage frappe la pointe s-SNOM (11) à une phase de modulation $\phi_i$ spécifique de pointe s-SNOM de l'oscillation mécanique,
- un dispositif (30) de détection de lumière de diffusion agencé pour collecter des amplitudes $S_i$ d'impulsions de lumière de diffusion, chacune étant créée par la diffusion de l'une des impulsions de lumière d'éclairage au niveau de la pointe s-SNOM (11),
- un dispositif (40) de détection d'oscillation mécanique agencé pour collecter la phase de modulation $\phi_i$ de pointe s-SNOM associée à chacune des amplitudes $S_i$ d'impulsions de lumière de diffusion collectées, et
- un dispositif de démodulation (50) agencé pour calculer un signal en champ proche s-SNOM en démodulant une fonction de lumière de diffusion $S(\phi_i)$ des amplitudes $S_i$ d'impulsions de lumière de diffusion, en fonction des phases de modulation $\phi_i$ de pointe s-SNOM

**caractérisé en ce que**

- le dispositif (40) de détection d'oscillation mécanique est couplé à un dispositif de déphasage (60), dans lequel
- le dispositif de déphasage (60) est configuré pour séparer un signal de sortie du dispositif (40) de détection d'oscillation mécanique en une première partie de signal de sortie (X) et une seconde partie de signal de sortie (Y) qui est déphasée par rapport à la première partie de signal de sortie (X), et
- le dispositif de démodulation (50) est configuré pour calculer la phase de modulation $\phi_i$ de pointe s-SNOM de la modulation primaire à partir des première et seconde parties de signal de sortie (X, Y).

11. Appareil s-SNOM selon la revendication 10, dans lequel

- le dispositif de déphasage (60) comprend un filtre passe-tout (63), un module de déphaseur (65) à auto-étalonnage mis en œuvre en utilisant des boucles à verrouillage de phase (PLL) et des oscillateurs commandés en tension (VCO), un module de traitement de signal numérique (DSP) ou un circuit intégré prédiffusé programmable (FPGA).

12. Appareil s-SNOM selon l'une des revendications 10 à 11, dans lequel

- le dispositif de déphasage (60) est configuré pour séparer le signal de sortie de telle sorte que les première et seconde parties de signal de sortie (X, Y) présentent des amplitudes maximales égales.

13. Appareil s-SNOM selon la revendication 12, dans lequel

- le dispositif de déphasage (60) est configuré pour séparer le signal de sortie de telle sorte que la seconde partie de signal de sortie (Y) présente un déphasage $\pi/2$ par rapport à la première partie de signal de sortie (X), et
- le dispositif de démodulation (50) est configuré pour calculer la phase de modulation $\phi_i$ de pointe s-SNOM par $\phi_i =$ arctan (Y/X).

14. Appareil s-SNOM selon l'une des revendications 10 à 13, dans lequel

- le dispositif de démodulation (50) est configuré pour démoduler la fonction de lumière de diffusion $S(\phi)$ par l'extraction de coefficients de Fourier à partir des amplitudes d'impulsions de lumière de diffusion $S(\phi)$.

15. Appareil s-SNOM selon l'une des revendications 10 à 14, comprenant au moins l'une des caractéristiques suivantes

- un filtre passe-bande (61) est agencé entre le dispositif (40) de détection d'oscillation mécanique et le dispositif de déphasage (60),
- une source d'horloge d'échantillonnage (31) est couplée au dispositif (30) de détection de lumière de diffusion et au dispositif (40) de détection d'oscillation mécanique, dans lequel la source d'horloge d'échantillonnage (31) est agencée pour créer un signal d'horloge d'échantillonnage pour l'échantillonnage des amplitudes $S_i$ d'impulsions de lumière de diffusion et des phases de modulation $\phi_i$ de pointe s-SNOM et
- un dispositif de balayage (14) est agencé pour balayer la pointe s-SNOM (11) et l'échantillon (1) l'un par rapport à l'autre et pour collecter une image d'échantillon.

16. Appareil s-SNOM selon l'une des revendications 10 à 15, dans lequel

- le microscope optique en champ proche (10) est configuré pour introduire au moins une modulation secondaire,
- au moins un dispositif (40') de détection de modulation secondaire est couplé à au moins un dispositif de déphasage (60') supplémentaire agencé pour fournir au moins une phase de modulation secondaire $\phi'_i$, pour chacune des amplitudes $S_i$ d'impulsions de lumière de diffusion collectées par déphasage d'une partie d'un signal de sortie de l'au moins un dispositif (40') de détection de modulation secondaire, et
- le dispositif de démodulation (50) est configuré pour calculer le signal en champ proche s-SNOM en démodulant la fonction de lumière de diffusion $S'(\phi'_i)$ des amplitudes S d'impulsions de lumière de diffusion en fonction de la phase de modulation $\phi_i$ de pointe s-SNOM et des au moins une phases de modulation secondaires $\phi'_i$.

FIG. 1

FIG. 2

FIG. 3

FIG. 4

FIG. 5

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1770714 B1

- EP 2980590 A1

**Non-patent literature cited in the description**

- **A. J. STERNBACH et al.** *Opt. Express*, 2017, vol. 25, 28589
- **A. J. STERNBACH et al.** *Nat. Commun*, 2020, vol. 11, 3567

- **H. WANG et al.** *Nat. Commun*, 2016, vol. 7, 13212